# FASCICULE DE BREVET EUROPEEN

(11) **EP 1 617 051 B1**
(45) Date de publication et mention de la délivrance du brevet: **07.09.2011**
(21) Numéro de dépôt: 05300541.9
(22) Date de dépôt: 30.06.2005
(51) Int. Cl.: F01N 3/20, F01N 3/023, F01N 13/02

(54) **Ligne d'echappement d'un moteur a combustion interne, et systeme d'epuration des gaz d'echappement la comprenant**
Abgasstrecke einer Brennkraftmaschine und Anlage zur Abgasreinigung
Exhaust line for an internal combustion engine and purifying system of the exhaust gas

(30) Priorité: 15.07.2004 FR 0407886
(43) Date de publication de la demande: 18.01.2006
(73) Titulaire: Peugeot Citroën Automobiles SA, 78140 Vélizy Villacoublay (FR)
(72) Inventeur: Schneider, Stéphanie, 92150, SURESNES (FR); Lendresse, Yvane, 92500, RUEIL MALMAISON (FR); Baumgartner, Eric, 75012, PARIS (FR)
(74) Mandataire: Pinchon, Odile

(56) Documents cités:
- EP-A1- 1 300 193
- EP-B1- 1 365 118
- DE-A- 10 242 303
- DE-A1- 10 128 414
- US-A1- 2003 180 195
- US-A1- 2003 209 011
- US-A1- 2003 233 824
- US-A1- 2004 098 975
- CHANDLER G ET AL: "EINFLUSSFAKTOREN AUF DAS ANSPRECHVERHALTEN LEICHTER DIESEL OXIDATIONSKATALYSATOREN FACTORS AFFECTING THE LIGHT-OFF PERFORMANCE OF LIGHT-DUTTY DIESEL OXIDATIONS CATALYSTS" AACHENER KOLLOQUIUM FAHRZEUG- UND MOTORENTECHNIK, XX, XX, 2000, pages 1063-1078, XP001015125

## Description

L'invention concerne le domaine de l'automobile, et plus particulièrement le traitement des émissions polluantes des moteurs à combustion interne, essence ou Diesel fonctionnant en mélange pauvre.

Les polluants issus de la combustion d'un moteur Diesel ou essence sont majoritairement des hydrocarbures imbrûlés HC, des oxydes d'azote NOx (monoxyde d'azote NO et dioxyde d'azote NO₂), le monoxyde de carbone CO et, dans le cas des moteurs Diesel et des moteurs injection directe essence mélange pauvre, des particules de suies. Afin de respecter les normes environnementales internationales, la maîtrise des émissions est impérative et des technologies de post-traitement des gaz d'échappement sont indispensables à cet effet.

Notamment dans le cas des moteurs Diesel, des systèmes de post-traitement sont déjà mis en place sur certains véhicules pour satisfaire les normes antipollution.

Le traitement de HC et CO s'effectue par catalyse d'oxydation. Cette réaction est facilitée dans le cas des moteurs Diesel par la présence d'un large excès d'oxygène dans la phase gazeuse.

Le traitement des particules s'effectue par piégeage dans un filtre. Pour réaliser la combustion des suies piégées dans ce filtre, plusieurs concepts sont étudiés par les constructeurs automobiles, comme par exemple le principe basé sur l'additivation du carburant avec un composé organométallique permettant de réduire significativement la température de combustion des suies, ou l'oxydation grâce à une formulation catalytique spécifique directement déposée sur les parois du filtre à particules, ou l'oxydation des suies en continu par réaction avec le NO₂, ou encore par une technique de réchauffage électrique. Certaines solutions sont déjà commercialisées sur des véhicules particuliers à moteur Diesel.

En ce qui concerne le traitement des NOx à l'échappement, aucun système n'est à ce jour commercialisé sur les véhicules Diesel. Par contre plusieurs technologies sont en cours de développement. C'est le cas du piège à NOx, qui a fait ses preuves sur les moteurs essence fonctionnant en mélange pauvre. Le principe en est basé sur un fonctionnement du moteur en séquentiel avec des alternances en mode pauvre (excès d'oxygène à l'échappement, donc stockage des NOx sur le matériau de stockage du piège qui est préférentiellement le baryum) et des alternances en mode riche (pas d'excès d'oxygène à l'échappement, donc déstockage et réduction des NOx en N₂). Un autre procédé appelé catalyse RCS (Réduction Catalytique Sélective) a pour principe de réduire sélectivement les NOx en azote, en présence d'un catalyseur spécifique, par l'action d'un réducteur soit se trouvant déjà dans les gaz d'échappement, soit injecté en amont du catalyseur RCS. Cette réduction s'effectue dans un milieu contenant un excès d'air. Le réducteur peut être un ou des hydrocarbure(s), ou des espèces hydrocarbonées partiellement oxydées, ou de l'ammoniac, ou un composé générant de l'ammoniac par décomposition chimique.

Par exemple, l'ammoniac peut être généré à partir d'une solution aqueuse d'urée selon les réactions chimiques décrites ci-dessous :

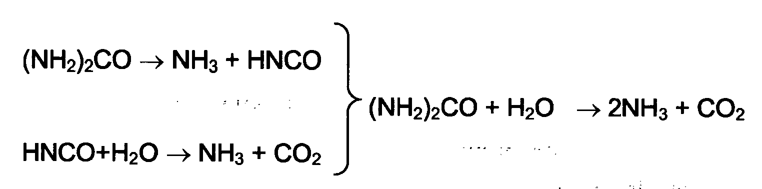

La transformation de l'urée par thermolyse a lieu aux alentours de 180°C.

Les catalyseurs RCS utilisés pour des applications mobiles sont à base de vanadium ou de cuivre/zeolithe. Le fonctionnement optimal de ce type de catalyseur a lieu dans un domaine de températures variant entre 200 et 450°C. Afin d'améliorer la réduction des NOx à basse température, il est intéressant de fournir du NO₂ de façon telle que le rapport NO₂/NO varie de 0,5 à 1 suivant la nature du catalyseur.

Les réactions chimiques qui ont alors lieu sur le catalyseur sont principalement :

4NO + 4NH₃ + O₂ → 4N₂ + 6H₂O

2NO₂ + 4NH₃ + O₂ → 3N₂ + 6H₂O

NO + NO₂ + 2NH₃ + O₂ → 2N₂ + 3H₂O

Un catalyseur d'oxydation de NH3 (à base de métaux précieux déposés sur des oxydes) peut être placé en aval du système RCS pour prévenir de toute surémission de NH3 en phase de fonctionnement.

US2004/098975 décrit une ligne d'échappement équipée successivement (dans le sens des gaz d'échappement) d'un catalyseur d'oxydation, d'un lieu d'injection d'un mélange d'un réducteur et d'air, d'un catalyseur de réduction des NOx et d'un filtre à particules. L'addition d'air est effectuée pour minimiser le dépôt de suies sur les parois du catalyseur deNOx et donc éviter que l'efficacité de ce catalyseur ne diminue peu à peu car ce catalyseur étant placé en amont du filtre à particules, il n'est pas nettoyé lors des régénérations du filtre. Dans US 2003/180195, le problème de l'encrassement du catalyseur deNox est écarté en plaçant ce catalyseur derrière le filtre à particules. Une configuration identique est proposée dans le document US 2003/0209011 (avec dans l'hypothèse où le filtre à particules est placé très près du moteur, l'absence éventuelle du premier catalyseur d'oxydation). DE10242303 décrit une configuration sensiblement identique, si ce n'est que le filtre à particules est associé à un piège à NOx, mais il n'en reste pas moins que le catalyseur SCR destiné à la réduction des NOx est bien en aval du filtre à particules, l'injection de réducteur se faisant en aval du filtre à particules. EP 1365118 a par ailleurs décrit un catalyseur SCR associé à un revêtement catalytique capable de craqué partiellement un carburant utilisé à titre d'agent de réduction sélective, de façon à améliorer l'efficacité du carburant comme agent de réduction. Dans une variante, un support de type filtre à particules est utilisé pour supporter les deux revêtements catalytiques, mais ce document ne suggère pas d'utiliser ce support également à titre de filtres. Dans tous les cas, il existe donc un besoin pour permettre un traitement complet des gaz dans une configuration compacte.

Le but de l'invention est de proposer une ligne d'échappement de moteur à combustion interne fonctionnant en mélange pauvre et ses annexes, conçue pour regrouper un maximum de fonctions d'épuration des gaz d'échappement, et organisée pour l'obtention d'une efficacité, d'un encombrement et d'un coût optimisés.

A cet effet, l'invention a pour objet une ligne d'échappement d'un moteur à combustion interne, comportant suivant le sens d'échappement des gaz, dans l'ordre, un premier catalyseur d'oxydation, un lieu d'injection d'un composé réducteur ou destiné à produire un réducteur, optionnellement un mélangeur, et un organe constitué par un filtre à particules dont seuls les canaux d'entrée sont imprégnés par une formulation catalytique RCS

Ledit composé réducteur peut être un hydrocarbure ou une espèce hydrocarbonée partiellement oxydée.

Ledit composé destiné à produire un réducteur peut être destiné à produire de l'ammoniac.

La ligne d'échappement peut également comporter optionnellement un catalyseur d'oxydation disposé en aval du filtre à particules.

En variante, le filtre à particules peut avoir des parois revêtues, au moins partiellement, par un catalyseur d'oxydation.

Ledit filtre à particules peut être du type comportant un réacteur à ionisation des gaz placé dans le médium filtrant.

L'invention a aussi pour objet un système d'épuration des gaz d'échappement d'un moteur à combustion interne, caractérisé en ce qu'il comporte une ligne d'échappement du type précédent.

Il peut comporter des moyens pour ajouter au carburant un additif destiné à se retrouver dans les suies collectés par le filtre à particules et à abaisser leur température de combustion.

Comme on l'aura compris, l'invention consiste à équiper la ligne d'échappement d'un moteur à combustion interne essence, notamment à mélange pauvre, ou Diesel, simultanément d'un catalyseur d'oxydation, d'un catalyseur RCS et d'un filtre à particules, de manière à traiter les quatre types de polluants majeurs. Des variantes utilisant des organes supplémentaires et/ou permettant de regrouper plusieurs fonctions dans le même organe permettent d'obtenir des avantages particuliers.

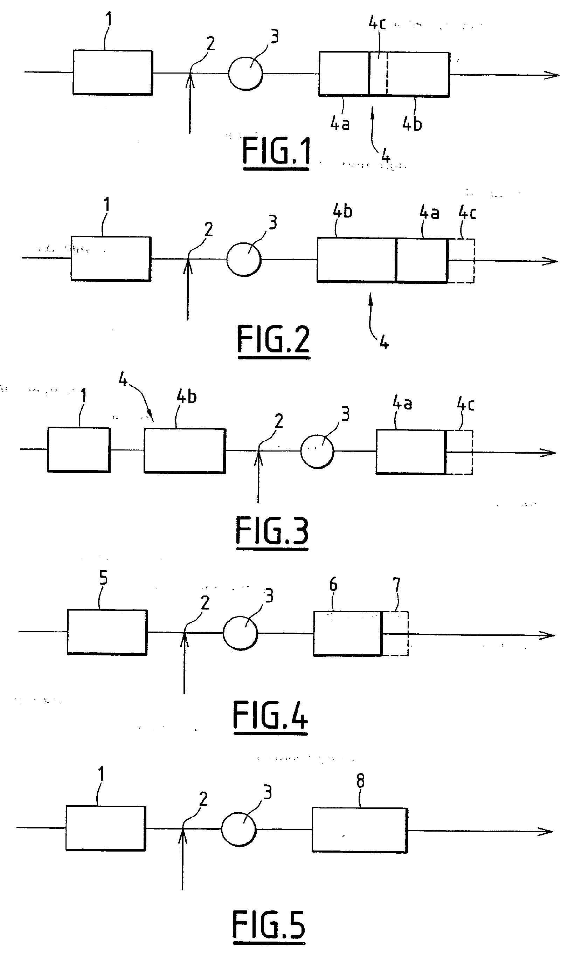

L'invention sera mieux comprise à la lecture de la description qui suit, donnée en référence aux figures 1 à 5 annexées qui montrent, aux figure 1 à 4, divers exemples de lignes d'échappement non représentatifs de l'invention, et à la figure 5, un exemple de ligne représentative de l'invention.

Les rôles des différents organes présents ou pouvant être présents sur la ligne d'échappement et des réactifs éventuels qu'ils renferment sont les suivants.

Le rôle du catalyseur d'oxydation est de convertir les HC et CO issus du moteur dans le but de satisfaire les normes antipollution, de créer l'exotherme qui permet d'atteindre les conditions de températures favorables à la régénération du filtre, et de transformer une partie du NO en NO2 pour favoriser la réaction de réduction des NOx par le réducteur à basse température. Il est essentiellement constitué de métaux précieux (platine, palladium, rhodium) déposés sur un support oxyde. Le substrat peut être en cordiérite ou métallique, suivant son emplacement dans la ligne.

Suivant le positionnement du catalyseur d'oxydation dans la ligne, en particulier s'il est fractionné en plusieurs éléments, les fonctions peuvent être réparties sur les différents éléments. Tous les éléments ont pour fonction primaire de traiter les HC et le CO. Le catalyseur positionné en amont du catalyseur RCS a également pour fonction de transformer NO en NO₂. Si un catalyseur d'oxydation est présent en aval du catalyseur RCS, il a pour fonction de traiter les éventuelles surémissions de NH₃. Si en plus il est situé en amont du filtre, il a pour fonction de générer l'exotherme nécessaire pour la régénération du filtre.

Le rôle du catalyseur RCS est de réduire les oxydes d'azote par réaction des NOx avec le réducteur, de préférence de l'ammoniac, au sein du système catalytique.

Dans le cas où le réducteur est de l'ammoniac, ce dernier est généré par l'intermédiaire d'un précurseur stocké à bord du véhicule (urée en solution aqueuse, urée solide, carbamate d'ammonium, ou autres) ou directement stocké dans un réservoir à bord du véhicule. La transformation en ammoniac a lieu à différentes températures suivant le précurseur considéré.

Dans le cas d'une solution aqueuse d'urée à 32,5% en masse, l'urée se transforme en NH₃ par thermolyse à 180°C dans la ligne d'échappement sur le catalyseur RCS, qui peut dans ce cas être imprégné d'une fonction spéciale facilitant cette réaction (comme par exemple de la zéolithe).

Le réducteur peut également être un hydrocarbure, ou une espèce hydrocarbonée partiellement oxydée (CxHyOz), spécialement dédié, injecté à partir d'un réservoir embarqué à bord du véhicule, ou un supplément de carburant injecté dans les cylindres ou la ligne d'échappement, ou des hydrocarbures déjà présents dans les gaz d'échappement.

La formulation du catalyseur RCS peut être à base de cuivre, à base de fer, à base de vanadium ou à base de métaux précieux déposés sur une zéolithe ou des oxydes.

Dans le cas, par exemple, d'une réduction des NOx en N₂ par NH₃, son activité est optimale dans une zone de températures située entre 200 et 450°C.

Le catalyseur RCS peut être combiné à un réacteur à ionisation des gaz d'un type connu en lui-même (dit aussi « réacteur plasma non-thermique »).Un tel réacteur permet de favoriser la formation de NO₂ dans un domaine de basse température, ce qui a pour effet d'activer la réaction de réduction des NOx.

Le filtre à particules permet de piéger les particules. La régénération du filtre s'effectue de préférence grâce à la présence dans les suies d'un additif de régénération. L'additif peut être organométallique ou organique, du moment qu'il est rajouté au carburant et qu'il permet d'abaisser la température de combustion des suies par rapport à un système sans additif.

Le filtre peut être imprégné d'une fonction « catalyseur d'oxydation » spécifique. Cette fonction peut permettre de traiter les hydrocarbures et le CO, et, suivant son emplacement, les excédents de NH₃ par exemple.

Le filtre à particules peut intégrer des moyens de production de décharges plasma.

Le principe de fonctionnement d'une ligne d'échappement ainsi équipée est le suivant. On divise l'utilisation de la ligne d'échappement en une succession de phases hors régénération, correspondant à l'utilisation normale pendant laquelle le filtre à particules capte les particules de suies, et de phases de régénération du filtre, pendant lesquelles les particules qui se sont accumulées dans le filtre sont brûlées de manière à restaurer le capacités de filtration nominales de la ligne.

Pendant les phases hors régénération, les HC et CO sont traités par le catalyseur d'oxydation si la température des gaz d'échappement est supérieure à la température d'amorçage des réactions catalysées. La formulation est adaptée pour avoir un traitement de ces polluants suffisant pour respecter les normes. Le traitement des NOx s'effectue par NH₃ ou par un élément hydrocarboné, directement présent dans les gaz d'échappement ou provenant d'une injection effectuée en aval du catalyseur d'oxydation et en amont du mélangeur si un mélangeur est présent, et en tout cas en amont du catalyseur RCS. Si la température des gaz d'échappement n'atteint pas la température d'amorçage des réactions catalysées parce que le véhicule n'a démarré que depuis peu de temps, on ne réalise pas d'injection de réducteur dans la ligne pour éviter des surémissions de NH₃.

Le médium filtrant pour le piégeage des suies peut notamment être en cordiérite, SiC, nitrure de silicum, ou être métallique. Les cellules du filtre peuvent être symétriques ou asymétriques.

La quantité de réducteur (urée, carbamate d'ammonium...) à injecter dépend des paramètres suivants :
- efficacité de conversion de NOx souhaitée,
- température à l'entrée du filtre imprégné de catalyseur RCS,
- caractéristiques du catalyseur RCS (capacité de stockage du réducteur, domaine de température de fonctionnement),
- débit molaire de NOx (déterminé par l'utilisation de la cartographie des émissions de NOx, ou d'un capteur NOx).

Son injection est régulée par un système de contrôle intégré au contrôle moteur permettant de gérer le système de dosage associant le réservoir et la technologie de formation de NH₃, par exemple, et l'injection dans la ligne d'échappement (quantité injectée, durée de l'injection ...).

La quantité de NOx à réduire, donc la quantité de NH₃ à produire, peut être déduite en tenant compte des paramètres moteurs ou des données issue d'un capteur NOx situé en amont du catalyseur RCS et du système d'injection du réducteur.

En phase de régénération du filtre (déclenchée soit par le kilométrage depuis la dernière régénération, soit par la mesure de la perte de charge entre l'amont et l'aval du filtre, soit par cartographie des émissions de suies en utilisant la post-injection dans le cylindre en phase de détente du piston), le moteur émet une thermique plus importante mais aussi des quantités d'HC et de CO plus élevées que pendant les phases de chargement.

Pendant cette phase de régénération l'injection de réducteur peut ou non être stoppée, en fonction de la capacité du catalyseur RCS à traiter les NOx.

Si le filtre est imprégné d'une formulation de type catalyseur d'oxydation, il peut traiter les surémissions d'hydrocarbures, de CO et de NH₃ qui peuvent apparaître suivant les points de fonctionnement du moteur et la précision de l'injection de réducteur.

La figure 1 représente une première configuration de ligne d'échappement non représentative de l'invention.

Dans cette configuration, on trouve successivement sur la ligne d'échappement :
- le catalyseur d'oxydation, implanté ici dans un organe 1 spécialement dédié à sa fonction,
- le lieu 2 d'injection du réducteur ou de son précurseur, tel que de l'urée, qui sera utilisé lors de la catalyse RCS ;
- le mélangeur 3, optionnel, qui permet d'homogénéiser le mélange formé par les gaz d'échappement et le réducteur ou son précurseur ;
- un organe unique 4 comportant en succession une partie 4a consacrée à la catalyse RCS, et une partie 4b constituée par un filtre à particules comportant éventuellement en amont un catalyseur d'oxydation 4c permettant d'assurer diverses fonctions comme la création de l'exotherme ou le traitement d'émissions résiduelles de NH₃ ou éventuellement des parois revêtues d'un catalyseur permettant d'assurer diverses fonctions, par exemple un catalyseur d'oxydation traitant les émissions résiduelles de réducteur sortant de la partie 4a consacrée à la catalyse RCS.

La variante représentée sur la figure 2 ne diffère de la précédente que par l'inversion de la position des parties 4a et 4b de l'organe 4 : le filtre à particules 4b est placé avant le catalyseur RCS 4a. De cette façon, on ne peut pas traiter les émissions résiduelles de réducteur sortant de la partie 4a. En revanche, la réaction de catalyse RCS a lieu sur des gaz d'échappement épurés de leurs particules : le lit catalytique est donc moins rapidement encrassé que dans la configuration précédente. La réaction de traitement des NOx est donc en général plus efficacement réalisée et un traitement postérieur des émissions de réducteur résiduelles est moins utile. Il serait, de toute façon, possible de rajouter optionnellement une partie 4c à l'organe 4, qui comporterait un catalyseur d'oxydation traitant ces émissions résiduelles.

On peut également envisager d'injecter le réducteur en un point 2 situé en aval de l'élément filtrant les particules, de manière à pouvoir implanter le filtre 4b (ainsi que le catalyseur d'oxydation obligatoire 1 situé en tête de la ligne d'échappement) dans le compartiment moteur, et le mélangeur optionnel, le catalyseur RCS 4a et un catalyseur d'oxydation supplémentaire 4c optionnel sous le plancher du véhicule. Cette configuration est illustrée sur la figure 3.

La variante représentée sur la figure 4 comporte successivement sur la ligne d'échappement :
- un filtre à particules 5 dont les parois sont revêtues d'un catalyseur d'oxydation ;
- le lieu 2 d'injection du réducteur ou de son précurseur, qui sera utilisé lors de la catalyse RCS ;
- le mélangeur optionnel 3 ;
- le catalyseur RCS implanté dans un organe 6 spécialement dédié à cette fonction, auquel peut optionnellement succéder une zone 7 comportant un catalyseur d'oxydation traitant les émissions résiduelles de réducteur.

De préférence, toutes ces variantes comportent également, comme il est connu, des moyens pour ajouter au carburant un additif organique ou organométallique destiné à se retrouver dans les particules de suies, dont il abaisse la température de combustion lors des opérations de régénération du filtre à particules 4b, 5.

L'invention représentée sur la figure 5 diffère des systèmes des figures 1 et 2 en ce que toutes les fonctions filtre à particules et catalyse RCS sont exécutées simultanément au sein du même organe 8. De cette façon, on optimise l'encombrement de la ligne d'échappement, en la rendant plus facilement implantable sur des véhicules non initialement prévus pour la recevoir.

A cet effet, on imprègne les parois d'un filtre à particules 8 par la formulation catalytique RCS. Cette imprégnation peut être réalisée sur tout ou partie des canaux d'entrée. . On peut éventuellement choisir de ne pas réaliser d'imprégnation dans la zone de fond des canaux d'entrée. En effet, c'est dans cette zone que tendent à s'accumuler les différents résidus de combustion non dégradés. Ces résidus tendent à gêner les réactions chimiques qui seraient susceptibles de se produire sur les parois du filtre imprégnées, et le rendement de ces réactions deviendrait de plus en plus médiocre, voire nul, au fil de l'utilisation du filtre jusqu'à son nettoyage poussé. Dans ces conditions, on peut considérer qu'il est inutile d'imprégner ces zones par du catalyseur qui deviendrait assez vite inefficace, et en supprimant cette imprégnation, on réalise une économie de matière sans réellement altérer l'efficacité du filtre à particules catalysé.

De préférence, on imprègne les extrémités des canaux de sortie du filtre à particules 8 par un catalyseur d'oxydation pour traiter les émissions résiduelles de réducteurs, tels que les HC et CO issus des phases de régénération ou le NH₃ non réagi issu de l'injection du réducteur ou de son précurseur utilisé pour la catalyse RCS.

Une autre variante de l'invention consiste à utiliser un filtre à particules du type à réacteur à ionisation des gaz placé directement dans le médium filtrant.

Un tel filtre à particules est décrit, notamment, dans le document WO-A-03/072239. Son principe de fonctionnement est d'obtenir des décharges plasma directement dans le médium filtrant. Ce système permet de piéger les suies, puis de les détruire par action des radicaux, électrons et ions générés par la décharge plasma. Ce réacteur à ionisation combiné au filtre doit être connecté à une alimentation électrique permettant de fournir la quantité d'énergie suffisante au fonctionnement du réacteur. Il doit aussi être connecté au calculateur du moteur pour garantir son fonctionnement en mode séquentiel ou continu selon la stratégie retenue par l'utilisateur. L'alimentation électrique est préférentiellement de type impulsionnelle mais peut également être sinusoïdale ou continue.

Le principe du plasma consiste à générer des espèces métastables, des radicaux et des ions très réactifs par collision ente les molécules constituant les gaz d'échappement et les électrons énergétiques produit par les décharges électriques, et ceci sans élévation de la température du milieu réactionnel.

Les caractéristiques physiques des décharges électriques varient selon l'application visée, les consommations et les niveaux de conversion nécessaires pour les applications moteurs (fréquence, tension et intensité variables).

Les espèces métastables produites, radicaux et électrons fortement énergétiques, sont des agents promoteurs de l'oxydation chimique dans un gaz d'échappement contenant un excès d'oxygène, comme par exemple les particules de suie, par interaction directe de ces espèces à durée de vie très courte avec les polluants.

Un tel filtre à particules intégrant un réacteur à ionisation des gaz peut se substituer au filtre à particules habituel dans toutes les configurations qui ont été précédemment décrites, y compris celles où les parois du filtre sont recouvertes d'un ou plusieurs milieux catalytiques. Toutefois, la spécificité du réacteur à ionisation des gaz étant sa possibilité de fonctionnement à basse température (donc dès le démarrage du moteur), l'architecture préférentielle retenue correspond à un système de filtre régénéré par décharges plasma placé le plus en aval possible dans la ligne d'échappement (comme dans les variantes des figures 1 et 5). Ainsi, l'amorçage des catalyseurs est favorisé par le placement du système catalytique le plus en amont possible, près de la sortie moteur.

Dans ces conditions, deux stratégies de fonctionnement peuvent être appliquées, à savoir :
a) Initier la régénération du filtre seulement lorsque la charge limite en particules de suies est atteinte. Dans ces conditions, le lit de suies formé par l'accumulation de particules est important et les paramètres électriques appliqués au système plasma conduisent à la mise à disposition à l'intérieur du filtre d'une énergie élevée (par exemple, une énergie de plusieurs centaines de Watt) sur des temps courts (par exemple, quelques minutes).
b) Activer la fonction de régénération systématiquement après seulement quelques minutes de chargement du filtre. L'avantage de cette stratégie est d'oxyder les particules de suie pratiquement dès leur piégeage dans les canaux du filtre à particules, pour éviter une accumulation trop importante engendrant des contre-pressions à l'échappement trop importantes et donc des surconsommations de carburant. L'énergie injectée pourra être faible en mode continu ou plus élevée en mode séquentiel. Les paramètres électriques retenus dépendront de l'application moteur et véhicule, de l'efficacité d'oxydation ciblée, de l'énergie disponible en fonction des contraintes de roulage demandées par le conducteur...

## Revendications

1. Système d'épuration des gaz d'échappement d'un moteur à combustion interne, comportant suivant le sens d'échappement des gaz, dans l'ordre, un premier catalyseur d'oxydation (1), un lieu d'injection d'un composé réducteur ou destiné à produire un réducteur, optionnellement un mélangeur (3), et un organe (8) constitué par un filtre à particules comportant des canaux d'entrée et de sortie, imprégnés par une formulation catalytique RCS **caractérisé en ce que** la formulation catalytique est présente sur les seuls canaux d'entrée du filtre à particule.

2. Système selon la revendication 1, **caractérisé en ce que** les canaux de sortie du filtre à particules sont imprégnés par un catalyseur d'oxydation.

3. Système selon l'une quelconque des revendications précédentes, **caractérisé en ce que** ledit filtre à particules est du type comportant un réacteur à ionisation des gaz place dans le médium filtrant.

4. Système selon l'une quelconque des revendications précédentes, **caractérisé en ce que** ledit composé réducteur est un hydrocarbure ou une espèce hydrocarbonée partiellement oxydée.

5. Système selon l'une quelconque des revendications 1 à 3, **caractérisé en ce que** ledit composé réducteur est un réducteur est destine à produire de l'ammoniac.

6. Système selon l'une quelconque des revendications précédentes, **caractérisé en ce qu'**il comporte des moyens pour ajouter au carburant un additif destiné à se retrouver dans les suies collectées par le filtre à particules et à abaisser leur température de combustion.

## Claims

1. A system for purifying the exhaust gases of an internal combustion engine, including, in order in the exhaust direction of the gases, a first oxidation catalyst (1), a site for injecting a reducing compound or a compound for producing a reducing agent, optionally a mixer (3), and a member (8) formed by a particle filter including entry and exit channels which are impregnated with an SCR catalytic formulation, **characterised in that** the catalytic formulation is present only on the entry channels of the particle filter.

2. The system according to claim 1, **characterised in that** the exit channels of the particle filter are impregnated with an oxidation catalyst.

3. The system according to any one of the preceding claims, **characterised in that** said particle filter is of the type including a gas ionisation reactor placed in the filtering medium.

4. The system according to any one of the preceding claims, **characterised in that** said reducing compound is a hydrocarbon or a partially oxidised hydrocarbon species.

5. The system according to any one of claims 1 to 3, **characterised in that** said reducing compound is a reducing agent and is intended to produce ammonia.

6. The system according to any one of the preceding claims, **characterised in that** it includes means for adding to the fuel an additive which is intended to end up in the soot collected in the particle filter and reduce the combustion temperature thereof.

## Patentansprüche

1. System zur Reinigung der Abgase eines Verbrennungsmotors, umfassend in der Richtung der Abgases, in Reihenfolge, einen ersten Oxidationskatalysator (1), eine Stelle zur Injektion einer Reduktionsverbindung oder dazu bestimmt, ein Reduktionsmittel zu erzeugen, optional einen Mischer (3) und ein Organ (8), das aus einem Partikelfilter besteht, umfassend Ein- und Ausgangskanäle, imprägniert durch eine katalytische SCR-Formulierung, **dadurch gekennzeichnet, dass** die katalytische Formulierung nur auf den Eingangskanälen des Partikelfilters vorhanden ist.

2. System nach Anspruch 1, **dadurch gekennzeichnet, dass** die Ausgangskanäle des Partikelfilters durch einen Oxidationskatalysator imprägniert sind.

3. System nach einem der vorhergehenden Ansprüche, **dadurch gekennzeichnet, dass** der Partikelfilter der Art ist, die einen im Filtermedium angeordneten Reaktor zur Ionisierung der Gase umfasst.

4. System nach einem der vorhergehenden Ansprüche, **dadurch gekennzeichnet, dass** die Reduktionsverbindung ein Kohlenwasserstoff oder eine teilweise oxidierte Kohlenwasserstoffart ist.

5. System nach einem der Ansprüche 1 bis 3, **dadurch gekennzeichnet, dass** die Reduktionsverbindung ein Reduktionsmittel ist, das dazu bestimmt ist, Ammoniak zu produzieren.

6. System nach einem der vorhergehenden Ansprüche, **dadurch gekennzeichnet, dass** es Mittel umfasst, um dem Kraftstoff ein Zusatzmittel hinzuzufügen, das dazu vorgesehen ist, sich in dem durch den Partikelfilter aufgefangenen Ruß wiederzufinden und dessen Verbrennungstemperatur abzusenken.
